# FASCICULE DE BREVET EUROPEEN

(11) **EP 0 803 279 B1**
(45) Date de publication et mention de la délivrance du brevet: **05.03.2003**
(21) Numéro de dépôt: 97400797.3
(22) Date de dépôt: 08.04.1997
(51) Int. Cl.: B01D 53/86, C02F 1/72

(54) **Procédé catalytique de désodorisation et désazotation de rejets polluants à fonctionnement autothermique**
Autothermisches katalytisches Verfahren zur Desodorierung und Denitrierung von Schadstoffen
Autothermic catalytic process for deodorizing and denitrating polluting waste

(30) Priorité: 26.04.1996 FR 9605398
(43) Date de publication de la demande: 29.10.1997
(73) Titulaire: INSTITUT FRANCAIS DU PETROLE, 92502 Rueil-Malmaison (FR)
(72) Inventeur: Morlec, Jean, 44600 Saint Nazaire (FR)

(56) Documents cités:
- FR-A- 2 701 220

## Description

La présente invention concerne un procédé autotherme de traitement des matières organiques en fermentation et plus particulièrement les lisiers de porcs qui contiennent des produits soufrés et azotés malodorants. La présente invention s'applique également au traitement de lisiers de canard, au traitement de fientes de poule et autres volatiles, au traitement d'autres déjections animales, au traitement de lixiviats d'ordures ménagères et au traitement de tous produits similaires ou équivalents. Le procédé selon l'invention permet l'élimination dans des matières organiques en fermentation d'hydrogène sulfuré, de mercaptans, d'ammoniac et de composés organiques par exemple volatils et/ou azotés tels que amines, amines légères, dérivés d'acides gras ou acides gras, phénols, aldéhydes.... La présence de ces produits plus ou moins volatils pose à l'épandage des problèmes d'environnement : problèmes liés aux odeurs et problèmes liés à l'apport soudain de produits azotés dont l'ammoniaque qui participent à la pollution des eaux de surface et de la nappe phréatique.

L'invention concerne donc essentiellement un procédé catalytique de désodorisation et désazotation de rejets polluants, notamment d'effluents polluants et nauséabonds, dont le fonctionnement est autothermique à partir d'une teneur minimale en ammoniac et produits volatils. L'invention concerne notamment un procédé autotherme en deux étapes permettant au niveau, par exemple, d'une fosse de rétention ou dans un dispositif appelé SMELOX, dans une première étape, l'élimination chimique dans une première zone de réaction des composés les plus malodorants, le strippage à l'air d'une fraction des composés organiques les plus volatils et de l'ammoniac; et dans une deuxième étape conduite dans une seconde zone de réaction, la combustion des produits strippés et l'oxydation de l'ammoniac en azote et en eau qui sont conduits dans un réacteur catalytique. L'appoint en énergie, s'il s'avère nécessaire, est réalisé de façon classique par exemple par un brûleur à fuel ou à gaz, ou par une batterie électrique ou par apport de vapeur.
L'appoint énergétique peut être réalisé d'une autre façon, par injection d'une certaine quantité de combustible liquide ou gazeux au niveau du lit catalytique. C'est la chaleur de combustion des produits strippés, de l'ammoniac en particulier, qui assure le chauffage des gaz admis sur le lit catalytique de la deuxième zone de réaction, par l'intermédiaire d'une échangeur placé en amont. Ce sont les fumées chaudes émises par le lit catalytique qui assurent le chauffage de la première zone de réaction, par l'intermédiaire d'un échangeur submergé situé en bas de colonne.

Parmi les composés les plus malodorants de ce milieu on compte les mercaptans et plus particulièrement les mercaptans légers ; leur oxydation sous forme de sels sodiques, potassiques ou calciques par exemple, permet de les transformer en disulfures dont le seuil de reconnaissance exprimé en volume par million est bien plus élevé et qui présentent l'avantage d'être bien moins volatils. L'apport d'oxygène s'opère par un barbotage énergique d'air dans le milieu liquide éventuellement additionné d'une base alcaline ou forte (la potasse ou la chaux de préférence ou la soude ou l'hydroxyde de lithium ou un carbonate de la dite base forte ou alcaline). Cette oxydation qui est conduite entre pH 8 et 10, peut être catalysée par divers types d'agents actifs soit organiques, tels les composés de la famille des tanins, soit organométalliques du type chélates parmi lesquels les phtalocyanines des métaux de transition, soit même minéraux, telle la SODALITE à forte teneur en radicaux soufre connue dans le commerce sous le vocable de bleu d'OUTRE-MER. Ces catalyseurs peuvent être utilisés soit sous forme soluble dans l'eau, soit sous forme de poudres en suspension, tel le bleu d'outre-mer pulvérulent. Ce qui a été décrit ci-dessus est la première étape du procédé.

L'air de barbotage utilisé pour l'oxydation entraîne hors du stockage une quantité plus ou moins importante de composés volatils qui sont essentiellement des composés organiques volatils et de l'ammoniac. Dans une seconde étape, selon l'invention, cet air chargé en ammoniac et en composés chimiques volatils (C.C.V). passe en majeur partie et de préférence totalement sur un catalyseur de combustion où les C.C.V. sont transformés pour l'essentiel en gaz carbonique CO₂, l'ammoniac étant transformé par oxydation en azote moléculaire et le soufre des composés sulfurés en SO₂.

Le présent procédé est un perfectionnement de la demande de brevet européen EP -A- 682973

L'élimination des mercaptans ou de leurs sels de bases fortes sous forme de disulfures est pratiquée depuis plus de 30 ans dans certains procédés d'adoucissement des coupes pétrolières légères. Pour sa part, l'IFP a développé divers catalyseurs et procédés dans ce domaine qui ont donné lieu aux brevets français FR-B-2 591 610, FR-B-2 619 822, FR-B-2 635 111 et EP-B-213 026.

Quant à la combustion catalytique des C.C.V. contenus dans l'air de barbotage, elle dérive d'une réaction connue et utilisée dans l'élimination de polluants dans les gaz de combustion industriels, les gaz d'échappement automobiles ainsi que les effluents des procédés d'oxydation. Il conviendra ici, de préférence, de sélectionner le catalyseur le mieux adapté pour traiter les effluents obtenus dans le cas particulier qui fait l'objet de la présente invention.

L'oxydation de l'ammoniac qui accompagne les C.C.V., sera réalisée sur un catalyseur approprié en donnant principalement de l'azote N2 et de l'eau. Dans la demande de brevet FR A-93/01441 que le présent procédé perfectionne, le traitement des C.C.V. s'accompagnait non pas d'une combustion directe d'ammoniac en azote moléculaire et en eau mais d'une transformation de l'ammoniac en oxyde(s) d'azote. Le procédé nécessitait alors une troisième étape de réduction des oxydes d'azote en azote moléculaire nécessitant la mise en oeuvre d'un troisième type de catalyseur. Le présent procédé permet en outre maintenant de pouvoir de préférence éliminer ou bloquer la totalité des mercaptans et la totalité de l'ammoniac libre.

L'invention concerne ainsi un procédé en 2 étapes permettant de traiter en particulier les lisiers de porcs ou autres effluents décrits plus haut de manière à les rendre à la fois moins malodorants et moins polluants au moment de leur épandage. Cet enchaînement de deux étapes spécifiques, avec fonctionnement autothermique, permet d'éliminer ou de retenir dans la phase liquide la totalité des mercaptans, d'entraîner puis d'oxyder une partie des composés chimiques volatils qui sortent avec la majeure partie de l'ammoniac libre c'est à dire gazeux. L'énergie dégagée dans les réactions d'oxydation est utilisée pour le chauffage des gaz envoyés au réacteur catalytique et à la mise en température de l' effluent à traiter. L'oxydation des mercaptans en disulfures s'opère en milieu basique à température ordinaire, la basicité étant apportée, si nécessaire, par exemple par ajout de potasse ou de chaux (utilisés de préférence) ou de carbonate de potassium à raison de 0,1 à 10 kg par m³ d'effluent à traiter. Les catalyseurs utilisés peuvent être des complexes métalliques de la famille des phtalocyanines, préférentiellement le fer, soit rendus solubles par sulfonation, soit insolubles mais déposés sur du carbone activé qui exerce un effet cocatalytique sur la transformation des mercaptans en disulfures.

Parmi les autres catalyseurs qui activent cette oxydation sélective des mercaptans, citons également des dérivés tanniques en présence de sels de fer[1-(2 Thiazolylazol)] - 2 - napthol et analogues phénoliques diversement substitués. Certains composés minéraux dérivés de la sodalite manifestent également une bonne activité catalytique dans la mesure où ils ont été traités à haute température en présence de sulfure de sodium (bleu d'Outre-Mer).

Le catalyseur de combustion peut être à base de métaux précieux à très faibles teneurs promus ou non par du cuivre, du fer, des terres rares. Des catalyseurs plus communs à base d'oxyde de cobalt, de manganèse, de vanadium peuvent être également utilisés mais à des températures supérieures de 100 à 150° C, c'est-à-dire à partir de 400° C au lieu de 250-300° C pour les métaux précieux. Les supports utilisés seront de préférence des alumines de basse surface spécifique ou mieux de l'oxyde de titane. Le réacteur doit donc être éventuellement préalablement chauffé pour que la réaction de combustion puisse se déclencher. Une fois la réaction amorcée, l'exothermicité liée à la combustion de l'ammoniac et des C.O.V. permet d'arrêter le préchauffage. La vitesse spatiale est par exemple, comprise entre 10 000 et 100.000 h⁻¹ et de préférence entre 20.000 et 50.000 h⁻¹ c'est-à-dire entre 20.000 et 50.000 litres de gaz total par litre de catalyseur et par heure.

Les catalyseurs solides sont disposés dans les réacteurs de manière à créer la plus petite perte de charge possible pour diminuer la puissance des équipements de circulation d'air. Les lits envisagés peuvent donc être radiaux ou axiaux; dans le cas de réacteurs axiaux, on pourra avantageusement disposer le catalyseur dans des enveloppes en acier inoxydable (tétraèdes, cylindres). Le support le mieux adapté à une opération effectuée à pression atmosphérique étant la structure en nid d'abeille, laquelle permet de minimiser les pertes de charge.

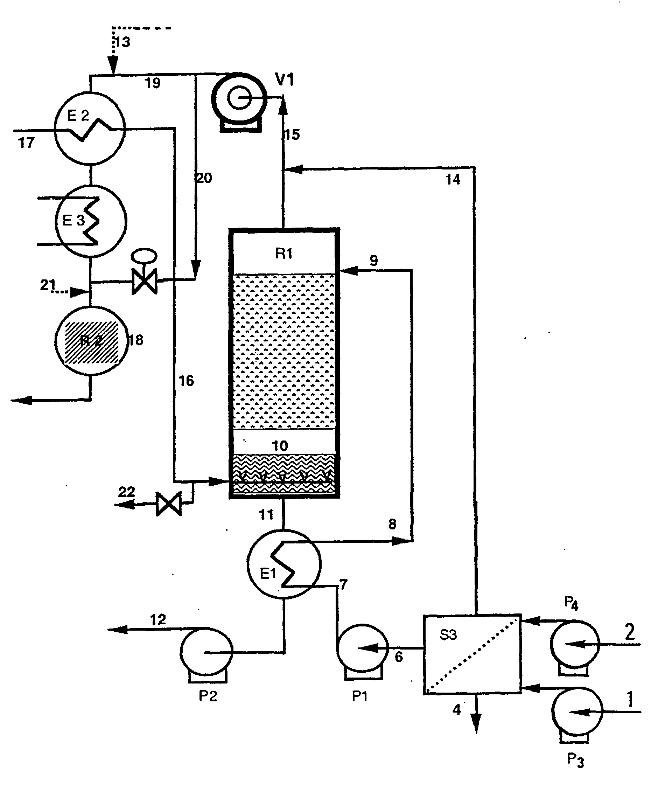

La figure 1 illustre l'invention.

L'effluent à traiter arrive, à la température ambiante, de l'ordre de 5 à 40° C , par la ligne 1 et la pompe P3 dans un séparateur de phases S 3, qui élimine les matières sèches et la majeure partie des matières en suspension. La pompe P4 assure le dosage du catalyseur SMELOX d'oxydation des mercaptans , introduit dans l'unité, et amené par la conduite 2. Par la ligne 4, on soutire les matières sèches (M.S.) et les matières en suspension (M.E.S.). L'effluent liquide clarifié, chemine par la ligne 6, la pompe P1 et la ligne 7 à travers un échangeur E1, puis par les lignes 8 et 9 pénètre avec le catalyseur dans la zone réactionnelle R1. Le lisier chaud se trouve donc introduit en tête du réacteur. En bas du réacteur, on introduit par la ligne 16 les fumées chaudes provenant du réacteur R2, qui par l'intermédiaire d'un diffuseur submergé sont refroidies par le liquide du bas de colonne dans la zone 10 . On élimine ainsi du lisier, par strippage, NH3, des amines, et des CCV . Dans le réacteur R1 se produit également l'oxydation des mercaptans en disulfures qui sont entrainés par le liquide vers le fond 10 du réacteur, puis sortent de l'installation au travers de l'échangeur charge-effluent E1, à l'aide de la pompe P2. La température de la colonne de stripping et de la zone 10 est généralement comprise entre 40 et 90° C. Tout type de réacteur convient. On préfére cependant un réacteur comportant, dans sa partie basse, une zone de barbotage du gaz dans le liquide et, dans sa partie haute, une zone de contact gaz-liquide à contre-courant en présence d'un garnissage. À titre d'exemple on alimente R1 par la ligne 16 avec 1200 Kg/h de gaz renfermant de l'oxygène et par la ligne 9 avec 4 tonnes/h de lisier de porc. On soutire par la ligne 11, au fond du réacteur, un liquide désodorisé et déazoté qui, à travers la pompe P2, traverse l'échangeur E₁. On récupère par la ligne 12, un liquide désodorisé et déazoté.

Les gaz strippés du réacteur R₁ sont aspirés par un ventilateur V₁ par la ligne 15 en même temps qu'une quantité contrôlée d'air provenant par la ligne 14 du séparateur de phases 3. Ceci permet d'éviter toute fuite de gaz malodorants vers l'extérieur du séparateur S3 qui n'est généralement pas étanche aux gaz. À travers la ligne 19, l'échangeur E2 et l'échangeur d'appoint thermique E3, ces gaz vont alimenter un réacteur R2 d'oxydation en 18.

La ligne 20 est une ligne de by-pass des échangeurs E2 et E3, qui, équipée d'une système de régulation, assure le réglage de température du lit catalytique. Dans ce réacteur, à l'aide d'un catalyseur approprié, on provoque l'oxydation de l'ammoniac et des composés chimiques volatils. Les gaz de combustion, qui sont chauds, sont soutirés par la ligne 17 et vont, à travers l'échangeur E2 réchauffer les gaz issus de V1 et par la ligne 16, chauffer le réacteur R1, au moyen du diffuseur de bas de colonne. Au cas où la teneur en ammoniac et CCV est insuffisante pour maintenir le fonctionnement autothermique, un appoint de fuel ou de combustible gazeux peut être envoyé dans le réacteur R2, soit directement par ligne 21, soit par la ligne 13 au travers des échangeurs E2 et E3. Une purge de gaz, issu du réacteur R2 est réalisé par la ligne 22, de manière à maintenir la teneur en oxygène désirée dans le gaz alimentant le réacteur R1 par un appoint d'air équivalent au travers de la ligne 14. La teneur en oxygène à l'entrée du réacteur R2 est maintenue à une valeur correspondant à environ deux fois la stoechiométrie de la réaction d'oxydation des réactifs amenés par le gaz de stripping et éventuellement introduits par la ligne 13.

La présente invention concerne donc également l'appareil mis en oeuvre pour opérer le procédé de l'invention.

L'appareil mis en oeuvre pour réaliser un schéma tel que celui de la figure 1 comporte
- un réacteur pour effectuer la 1ère étape,
- un réacteur pour effectuer la 2ème étape,
- des moyens pour chauffer le réacteur de première étape avec l'apport de chaleur fourni par la combustion de deuxième étape.

L'appareil comporte de préférence également :
- un ventilateur assurant le recyclage des gaz entre les réacteurrs de première et deuxième étape,
- des moyens pour assurer le réchauffage des gaz arrivant du réacteur de première étape à l'aide de la chaleur produite par la combustion de deuxième étape ,
- des moyens d'assurer un apport énergétique initial ou d'appoint au système,
- des moyens supplémentaires eventuels d'injecter sur le réacteur de deuxième étape un appoint en combustible liquide ou gazeux,
- des moyens pour chauffer la charge introduite dans le dispositif à l'aide de l'effluent chaud soutiré en fond du réacteur de première étape.

De préférence les conditions opératoires de la première étape (R1) sont les suivantes :
- **T** 40à 90° C selon le taux de déazotation exigé ,
- **P** entre 15 KPa et la pression atmosphère , amont/aval du réacteur,
- **Appoint d'air :** environ deux fois la stoechiométrie
- **Recyclage :** 50 à 500 Nm³/h de gaz par m3 de liquide à traiter, (de préférence autour de 400 Nm³/m³/h)
- **Catalyseurs d'oxydation des mercaptans :**
   - phtalocyanines solubles (sulfonées de métaux de transition Co et Fe).
   - phtalocyanines insolubles déposées sur C actif (200 à 1200 m²/g)
   - concentration de phtalocyanine : 10 à 200 ppm rapportée au volume liquide à traiter.
   - Bleu d'Outre-mer de 1 à 100 g par m³ de produit à traiter ; de préférence autour de 10 g par m3.

Dans une méthode préférée, la potasse de la première étape est remplacée par de la chaux. L'appoint de catalyseur d'oxydation de première étape est généralement réalisé en même temps que l'appoint de base alcaline, sous forme d'une solution ou d'une suspension renfermant les deux produits.

Le catalyseur d'oxydation de deuxième étape R2, renferme au choix :
a)- Pt ou Pd sur réfractaire, silice zircone, silice alumine, alumine stabilisée, terres naturelles du type sepiolite, attapulgite, zéolite Y ou mordénite, cordiérite, mullite, oxyde de titane. Le catalyseur peut avantageusement être promu par des métaux du groupe I B de la classification périodique (Au, Ag, Cu) et par des oxydes de terres rares et de fer.
b) - oxydes de métaux de transition, Fe, Co, Mn, V, W, seuls ou en mélange

De préférence les conditions opératoires de la deuxième étape (R2) sont les suivantes :
**T** : 150 à 550° C, de préférence 350°C en sortie,
**P** : sous légère pression, atmosphérique ou réduite
**VVH** : entre 5 000 et 100 000 m³ de flux gazeux par m³ de catalyseur et par heure, et de préférence entre 20 000 et 50 000 h⁻¹.

Les gaz envoyés dans le réacteur R2 sont préchauffés à une température de 200 à 500° C, de préférence 180 à 250° C.
Les lits de catalyseur en billes ou en extrudés, sont radiaux pour réduire la perte de charge.
Dans le cas des lits de catalyseur axiaux, le catalyseur peut-être inséré dans des volumes de 5 à 10 cm³, par exemple, pour réduire les pertes de charge et surtout leur augmentation au cours du temps.
De préférence, le lit de catalyseur est constitué par une structure céramique ou métallique en nid d'abeille , enduite avec une phase support adéquate.

Le procédé selon l'invention peut donc s'appliquer aux lisiers de porc mais également peut s'appliquer à d'autres effluents malodorants chargés en ammoniac dans la mesure où ils sont préalablement mis en suspension dans l'eau : fientes de volailles ou d'autres volatiles ainsi que les autres déjections animales, eaux usées diverses etc.

Les opérations de désodorisation et d'élimination des composés azotés volatils peuvent être réalisées par exemple en continu ou de préférence périodiquement.

## Revendications

1. Procédé d'élimination, dans des matières organiques en fermentation, d'hydrogène sulfuré, de mercaptans, d'ammoniac et de composés chimiques volatils, selon un processus en deux étapes comportant :
a) en première étape: la transformation par oxydation des mercaptans en disulfures et de l'hydrogène sulfuré en sulfures, en présence d'air et d'au moins un catalyseur avec apport d'oxygène obtenu par barbotage dans un liquide à pH basique, éventuellement rendu basique par addition d'une base alcaline choisie parmi la potasse, la chaux, la soude et l'hydroxyde de lithium ou un carbonate de la dite base alcaline,
b) en deuxième étape: une combustion catalytique de l'ammoniac et des composés chimiques volatils entraînés dans l'air d'oxydation,
le procédé étant **caractérisé en ce qu'**il fonctionne de façon autothermique, la chaleur nécessaire au système étant apportée par la chaleur de combustion de la deuxième étape, et récupérée par les échangeurs gaz-gaz et liquide-liquide placés sur les circuits.

2. Procédé selon la revendication 1 dans lequel les conditions opératoires de la première étape sont les suivantes :
- T : de 40 à 90°C selon le taux de désazotation recherché,
- P : entre 15 kPa et la pression atmosphère, amont /aval du réacteur,
- Appoint d'air : environ deux fois la stoechiométrie,
- Recyclage : 50 à 500 Nm³/h de gaz par m3 de liquide à traiter,
- Catalyseurs d'oxydation des mercaptans :
- phtalocyanines solubles et/ou phtalocyanines insolubles déposées sur C actif de surface spécifique de 200 à 1200 m²/g, à une concentration de phtalocyanine de 10 à 200 ppm rapportée au volume liquide à traiter ; ou
- Bleu d'Outre-mer à une concentration de 1 à 100 g par m³ de produit à traiter,
- Charge à traiter de pH supérieur à 8.

3. Procédé selon la revendication 2 dans lequel le recyclage est de 400 Nm³/h de gaz par m3 de liquide à traiter, le catalyseur d'oxydation des mercaptans est au moins
- une phtalocyanine sulfonée de métal de transition choisi entre le cobalt et le fer ; ou
- du Bleu d'Outre-mer à une concentration autour de 10 g par m3 de produit à traiter.

4. Procédé selon l'une des revendications 1 à 3 dans lequel les conditions opératoires de la deuxième étape sont les suivantes :
- T: 150 à 550° C,
- P : sous légère pression, sous légère atmosphérique ou sous légère réduite,
- vitesse volumique horaire (VVH) : entre 5 000 et 100 000 m³ de flux gazeux par m³ de catalyseur et par heure,
les gaz envoyés en deuxième étape étant préchauffés à une température de 200 à 500° C.

5. Procédé selon la revendication 4 dans lequel la température est de 350°C en sortie, la vitesse volumique horaire est entre 20 000 et 50 000 h-1 de flux gazeux par m³ de catalyseur et par heure, et les gaz envoyés en deuxième étape étant préchauffés à une température de 180 à 250°C.

6. Procédé selon l'une des revendications 1 à 5 dans lequel le catalyseur d'oxydation de deuxième étape renferme au choix :
a) Pt ou Pd sur un support réfractaire choisi parmi la silice-zircone, la silice-alumine, l'alumine stabilisée, la sépiolite, l'attapulgite, la zéolithe Y ou la mordénite, la cordiérite, la mullite, l'oxyde de titane ; ou
b) au moins un oxyde de métal de transition choisi parmi Fe, Co, Mn, V et W.

7. Procédé selon la revendication 6 dans lequel le catalyseur est promu par un métal du groupe IB de la classification périodique ou par un oxyde de terre rare ou de fer.

8. Procédé selon l'une des revendications 1 à 7 dans lequel les lits de catalyseur en billes ou en extrudés sont radiaux pour réduire la perte de charge.

9. Procédé selon l'une des revendications 1 à 7 dans lequel les lits de catalyseur en billes ou en extrudés sont axiaux, le catalyseur étant inséré dans des volumes de 5 à 10 cm³ pour réduire les pertes de charge et leur augmentation au cours du temps.

10. Procédé selon l'une des revendications 1 à 9 dans lequel le lit de catalyseur est constitué par une structure céramique ou métallique en nid d'abeille, enduite avec une phase support adéquate.

11. Procédé selon l'une des revendications 1 à 10 dans lequel, dans la première étape, le pH de la charge à traiter est ajusté au-dessus de 8 par addition de chaux.

12. Procédé selon l'une des revendications 1 à 11 dans lequel les opérations de désodorisation et d'élimination des composés azotés volatils sont réalisées en continu ou périodiquement.

13. Procédé selon l'une des revendications 1 à 12 dans lequel les dits composés organiques sont choisis dans le groupe constitué par les amines et les acides gras.

14. Procédé selon l'une des revendications 1 à 13 appliqué au traitement du lisier de porc.

15. Procédé selon l'une des revendications 1 à 13 appliqué au traitement des effluents malodorants chargés en ammoniac préalablement mis en suspension dans l'eau

16. Procédé selon la revendication 15 appliqué aux fientes de volailles, autres déjections animales et eaux usées diverses.

17. Procédé selon l'une des revendications 1 à 13 appliqué au traitement de lixiviats d'ordures ménagères.

18. Appareil pour la mise en oeuvre du procédé selon l'une des revendications 1 à 17, comportant :
- un réacteur (R1) pour effectuer la première étape,
- un réacteur (R2) pour effectuer la deuxième étape,
- des moyens pour chauffer le réacteur de première étape avec l'apport de chaleur fourni par la combustion de deuxième étape.

19. Appareil selon la revendication 18 comportant également :
- un ventilateur (V1) assurant le recyclage des gaz entre le réacteur (R1) de première étape et le réacteur (R2) de deuxième étape,
- des moyens (E2) et (E3) pour assurer le réchauffage des gaz arrivant du réacteur (R1) de première étape à l'aide de la chaleur produite par la combustion de deuxième étape dans le réacteur (R2),
- des moyens pour assurer un apport énergétique initial ou d'appoint au système,
- des moyens supplémentaires éventuels (13) et (21) pour injecter vers le réacteur de deuxième étape un appoint en combustible liquide ou gazeux,
- des moyens (E1) pour chauffer la charge introduite dans le dispositif à l'aide de l'effluent chaud soutiré en fond du réacteur de première étape.

20. Appareil selon l'une des revendications 18 et 19 comportant également un dispositif (21) permettant un appoint énergétique par introduction d'un combustible liquide ou gazeux sur le lit catalytique de deuxième étape.

## Claims

1. A process for eliminating hydrogen sulphide, mercaptans, ammonia and volatile chemical compounds from fermenting organic matter, the process being in two steps comprising:
(a) in the first step: transformation of the mercaptans to disulphides and the hydrogen sulphide to sulphides by oxidation, in the presence of air and at least one catalyst, adding oxygen by bubbling into a liquid at a basic pH, optionally made basic by addition of an alkaline base selected from potash, lime, caustic soda and lithium hydroxide or a carbonate of said alkaline base;
(b) in the second step, catalytic combustion of ammonia and volatile chemical compounds entrained in the oxidation air, among them certain low molecular weight amines and sulphur-containing compounds, the process being **characterized in that** it operates autothermally, the heat necessary for the system being supplied by the heat of combustion of the second step, and recovered by gas-gas and liquid-liquid exchangers placed in the circuits.

2. A process according to claim 1, in which the operating conditions for the first step are as follows:
- T 40°C to 90°C depending on the required degree of denitrogenation;
- P between 15 KPa and atmospheric pressure, upstream/downstream of the reactor;
- Air addition: about twice the stoichiometry;
- Recycle: 50 to 500 Nm³/h of gas per m³ of liquid to be treated;
- Mercaptan oxidation catalysts:
- soluble phthalocyanines and/or insoluble phthalocyanines deposited on activated C having a specific surface area of from 200 to 1200 m²/g at a phthalocyanine concentration of from 10 to 200 ppm with respect to the volume of liquid to be treated; or
- Ultramarine blue at a concentration of from 1 to 100 g per m³ of product to be treated;
- feed to be treated: pH greater than 8.

3. A process according to claim 2 in which the recycle is of 400 Nm³/m³/h of liquid to be treated, the mercaptan oxidation catalyst is at least a sulphonated phthalocyanine of a transition metal selected from cobalt and iron; or Ultramarine blue at a concentration of around 10 g per m³ of product to be treated.

4. A process according to any one of claims 1 to 3, in which the operating conditions of the second step are as follows:
- T: 150°C to 550°C;
- P: slight pressure, atmospheric pressure or reduced pressure;
- hourly space velocity (HSV): between 5000 and 100000 m³ of gas per m³ of catalyst per hour;
the gases sent to the second step being preheated to a temperature of 200°C to 500°C.

5. A process according to claim 4 in which the temperature 350°C at the outlet, the hourly space velocity is between 20000 and 50000 h⁻¹ of gas per m³ of catalyst per hour and the gases sent to the second step being preheated to a temperature of 180°C to 250°C.

6. A process according to any one of claims 1 to 5, in which the oxidation catalyst of the second step comprises:
(a) Pt or Pd on a refractory carrier selected from silica zirconia, silica alumina, stabilised alumina, sepiolite, attapulgite, Y zeolite or mordenite, cordierite, or mullite, or titanium oxide; or
(b) at least one oxide of a transition metal selected from Fe, Co, Mn, V or W.

7. A process according to claim 6 in which the catalyst is promoted by a metal from group 1B of the periodic table or by an oxide of a rare earth oxide or of iron.

8. A process according to any one of claims 1 to 7, in which the catalyst beds, in spherules or extrudates, are radial to reduce the pressure drop.

9. A process according to any one of claims 1 to 7, in which the catalyst beds, in spherules or extrudates, are axial, the catalyst being inserted in volumes of 5 to 10 cm³ to reduce the pressure drop and especially its increase over time.

10. A process according to any one of claims 1 to 9, in which the catalyst bed is constituted by a ceramic or metallic honeycomb structure, coated with a suitable support phase.

11. A process according to any one of claims 1 to 10, in which, in the first step, the pH of the feed to be treated is adjusted to more than 8 by adding lime.

12. A process according to any one of claims 1 to 11, in which the deodorisation and volatile nitrogen-containing compound elimination operations are carried out continuously or periodically.

13. A process according to any one of claims 1 to 12, in which said organic compounds are selected from the group constituted by amines and fatty acids.

14. A process according to any one of claims 1 to 13, applied to the treatment of pig manure.

15. A process according to any one of claims 1 to 13, applied to the treatment of malodorous effluents charged with ammonia previously suspended in water

16. A process according to claim 15 applied to poultry droppings and other animal excrement, and various waste waters.

17. A process according to any one of claims 1 to 13, applied to the treatment of household refuse.

18. An apparatus for carrying out the process according to any one of claims 1 to 17, comprising:
- a reactor (R1) for carrying out the first step;
- a reactor (R2) for carrying out the second step;
- means for heating the first step reactor with the heat provided by the second step combustion.

19. An apparatus according to claim 18, further comprising:
- a ventilator (V1)for recycling gas between the first step reactor (R1) and the second step reactor(R2);
- means (E2) and (E3) for reheating gas arriving from the first step reactor (R1) using the heat produced by the second step combustion in reactor (R2);
- means for initially providing heat or adding heat to the system;
- optional supplemental means (13) and (21) for injecting additional liquid or gaseous fuel into the second step reactor;
- means (E1) for heating the feed introduced into the apparatus using the hot effluent extracted from the bottom of the first step reactor.

20. An apparatus according to claim 18 or claim 19, further comprising means (21) for adding energy, by introducing a liquid or gaseous fuel to the catalytic bed in the second step.

## Patentansprüche

1. Verfahren zur Entfernung von Schwefelwasserstoff, Mercaptanen, Ammoniak und flüchtigen chemischen Verbindungen in organischen Materialien bei der Fermentation gemäß einem Verfahren in zwei Stufen, umfassend:
a) in einer ersten Stufe: die Transformation der Mercaptane zu Disulfiden und des Schwefelwasserstoffs zu Sulfiden durch Oxydation in Gegenwart von Luft und wenigstens einem Katalysator mit Sauerstoffzufuhr, erhalten durch Durchbla- sen in eine Flüssigkeit bei basischem pH, gegebenenfalls durch Zugabe einer Alkalibase basisch gemacht, die gewählt ist unter: Pottasche, Kalk, Soda und Lithiumhydroxyd oder einem Karbonat der Alkalibase;
b) in einer zweiten Stufe: katalytische Verbrennung des Ammoniaks und der in der Oxydationsluft mitgezogenen flüchtigen chemischen Verbindungen,
wobei das Verfahren **dadurch gekennzeichnet ist, dass** es autotherm arbeitet, wobei die für das System notwendige Wärme durch die Verbrennungswärme der zweiten Stufe zugeführt wird und durch Gas-Gas- und Flüssig-Flüssig-Austauscher gewonnen wird, die auf den Kreisläufen angeordnet sind.

2. Verfahren nach Anspruch 1, wobei die Betriebsbedingungen der ersten Stufe die folgenden sind:
- T: von 40 - 90°C gemäß dem gewünschten Denitrifizierungsgrad;
- P: zwischen 15 kPa und dem Atmosphärendruck vor/hinter dem Reaktor;
- Luftzufuhr: etwa das zweifache der Stöchiometrie;
- Recyclierung: 50 - 500 Nm³/h Gas pro m³ zu behandelnder Flüssigkeit;
- Oxydations-Katalysatoren der Mercaptane:
- lösliche Phtalocyanine und/oder unlösliche Phtalocyanine abgelagert auf Aktivkohle einer spezifischen Oberfläche von 200-1200 m²/g bei einer Phtalocyaninkonzentration von 10 - 200 ppm, was dem zu behandelnden Flüssigkeitsvolumen zugebracht ist; oder
- Ultramarinblau bei einer Konzentration von 1-100 g pro m³ zu behandelndes Produkt,
- zu behandelnde Charge bei einem pH über 8.

3. Verfahren nach Anspruch 2, bei dem die Recyclierung 400 Nm³/h Gas pro m³ zu behandelnder Flüssigkeit ist und der Oxydations-Katalysator der Mercaptane wenigstens ist:
- ein sulfoniertes Phtalocyanin eines Übergangsmetalls gewählt unter Kobalt und Eisen;
- Ultramarinblau von 10 g pro m³ zu behandelndes Produkt.

4. Verfahren nach einem der Ansprüche 1 bis 3 bei dem die Betriebsbedingungen der zweiten Stufe die folgenden sind:
- T: 150-550 °C;
- P: unter leichtem Druck, leichtem atmosphärischem oder leicht vermindertem Druck;
- stündliche Volumengeschwindigkeit (VVH): zwischen 5000 und 100 000 m³ Gasfluss pro m³ Katalysator und pro Stunde;
wobei die zur zweiten Stufe geschickten Gase auf eine Temperatur von 200 - 500°C vorgewärmt werden.

5. Verfahren nach Anspruch 4, bei dem die Temperatur 350°C am Ausgang, die stündliche Volumengeschwindigkeit (VVH): zwischen 20 000 und 50 000 h⁻¹ Gasfluss pro m³ Katalysator und pro Stunde ist und wobei die zur zweiten Stufe geschickten Gase auf eine Temperatur von 180-250°C vorgewärmt werden.

6. Verfahren nach einem der Ansprüche 1 bis 5, bei dem der Oxydationskatalysator einer zweiten Stufe wahlweise einschließt:
a) Pt oder Pd auf einem feuerfesten Träger, gewählt unter Silicium-Zirconiumoxyd, Silicium-Aluminiumoxyd, stabilisiertem Aluminiumoxyd, Sepiolit, Attapulgit, Y-Zeolith oder Mordenit, Cordierit, Mullit, Titanoxyd; oder
b) wenigstens ein Oxyd eines Übergangsmetalls gewählt unter Fe, Co, Mn, und W.

7. Verfahren nach Anspruch 6, bei dem der Katalysator durch ein Metall der Gruppe IB des Periodensystems der Elemente oder durch ein Seltenerdoxyd oder Oxyd von Eisen angeregt ist.

8. Verfahren nach einem der Ansprüche 1 bis 7, bei dem die Katalysatorbetten in Kugeln oder in Extrudaten radial sind, um den Chargenverlust zu vermindern.

9. Verfahren nach einem der Ansprüche 1 bis 7, bei dem die Katalysatorbetten in Kugeln oder in Extrudaten achsial sind, wobei der Katalysator in Volumen von 5 - 10 cm³ eingeführt wird, um die Chargenverluste und deren Vergrößerung im Lauf der Zeit zu vermindern.

10. Verfahren nach einem der Ansprüche 1 bis 9, bei dem das Katalysatorbett aus einer keramischen oder metallischen oder bienenwabenartigen Struktur, aufgetragen mit einer geeigneten Trägerphase besteht.

11. Verfahren nach einem der Ansprüche 1 bis 10, bei dem in der ersten Stufe der pH der zu behandelnden Charge über 8 durch Zugabe von Kalk eingestellt wird.

12. Verfahren nach einem der Ansprüche 1 bis 11, bei dem die Desodorierungsund Eliminierungsvorgänge der flüchtigen stickstoffhaltigen Verbindungen kon- tinuierlich oder periodisch durchgeführt werden.

13. Verfahren nach einem der Ansprüche 1 bis 12, bei dem die organischen Verbindungen gewählt sind aus der durch die Amine und die Fettsäuren gebildeten Gruppe .

14. Verfahren nach einem der Ansprüche 1 bis 13, angewandt auf die Behandlung von Schweinegülle.

15. Verfahren nach einem der Ansprüche 1 bis 13, angewandt auf die Behandlung von stinkenden Abströmen, die mit Ammoniak beladen sind, vor dem Suspendieren in Wasser.

16. Verfahren nach Anspruch 15, angewandt auf die Behandlung von Geflügelkot, andere tierische Ausscheidungen und verschiedene Abwässer.

17. Verfahren nach einem der Ansprüche 1 bis 13, angewandt auf Auslaugungen von Haushaltsgerüchen.

18. Vorrichtung zur Durchführung des Verfahrens gemäß einem der Ansprüche 1 bis 17, umfassend:
- einen Reaktor (R1), um die erste Stufe durchzuführen;
- einen Reaktor (R2), um die zweite Stufe durchzuführen;
- Mittel zum Erwärmen des Reaktors einer ersten Stufe mit Zufuhr von Wärme, die durch Zweitstufenverbrennung geliefert wird.

19. Vorrichtung nach Anspruch 18, auch umfassend:
- einen Ventilator (V1), der die Recyclierung der Gase zwischen dem Erststufenreaktor (R1) und dem Zweitstufenreaktor (R2) sicherstellt.
- Mittel (E2) und (E3) um die Wiedererwärmung der vom Erststufenreaktor (R1) ankommenden Gase mit Hilfe von Wärme, die durch die Zweitstufenverbrennung in dem Reaktor (R2) erzeugt wird.
- Mittel zum Sicherstellen einer Anfangs- oder eines Zusatzenergiezufuhr zu dem System,
- eventuelle Zusatzmittel (13) und (21), um zu dem Zweitstufenreaktor einen Zusatz an brennbarer Flüssigkeit oder brennbarem Gas einzuspritzen.
- Mittel (E1) zum Erhitzen der in die Vorrichtung eingeführten Charge mit Hilfe von dem heißen Abstrom, der am Boden des Erststufenreaktors abgezogen wird.

20. Vorrichtung nach einem der Ansprüche 18 und 19, auch umfassend eine Vorrichtung (21), die einen Energiezusatz durch Einführung einer brennbaren Flüssigkeit oder eines brennbaren Gases auf dem katalytischen Bett einer zweiten Stufe ermöglicht.
